Europäisches Patentamt

European Patent Office

Office européen des brevets

(11) Publication number: 0 627 698 A1

# EUROPEAN PATENT APPLICATION

(21) Application number: 93304323.4

(51) Int. Cl.5: G06F 15/72

(22) Date of filing: 03.06.93

(43) Date of publication of application:
07.12.94 Bulletin 94/49

(84) Designated Contracting States:
DE FR GB

(71) Applicant: HAMAMATSU PHOTONICS K.K.
1126-1 Ichino-cho
Hamamatsu-shi
Shizuoka-ken (JP)

(72) Inventor: Delpy, David Thomas, Univ. College
London, Dep. of
Med. Physics and Bio-Engineering,
Shropshire House
11-20 Capper Street, London WC1E 6JA (GB)
Inventor: van der Zee, Piet, Univ. College
London, Dep. of
Med. Physics and Bio-Engineering,
Shropshire House
11-20 Capper Street, London WC1E 6JA (GB)
Inventor: Cope, Mark, Univ. College London,
Dep. of
Med. Physics and Bio-Engineering,
Shropshire House
11-20 Capper Street, London WC1E 6JA (GB)
Inventor: Arridge, Simon R University College
London, dept.
of Computer Science
Gower street
London WCI (GB)

(74) Representative: Rackham, Stephen Neil
GILL JENNINGS & EVERY,
Broadgate House,
7 Eldon Street
London EC2M 7LH (GB)

(54) Optical computer tomograph.

(57) To reconstruct a spatial distribution of scattering coefficient in the interior of an object by an optical computer tomograph, a predicted value $F(\mu_k)$ of a transilluminated light predicted for the k-th presumed image $\mu_k$ is computed using a predetermined prediction operator F, wherein k is an integer. An initial predicted value $F(\mu_1)$ predicted on the basis of an initial presumed image $\mu_1$ is given for initial computation. Then, on the basis of a detection value $X$ at a light detection optical fiber and the predicted value $F(\mu_k)$, a difference $\{X - F(\mu_k)\}$ is computed wherein when the difference $\{X - F(\mu_k)\}$ falls within a predetermined range, the k-th presumed image $\mu_k$ is determined as a real scattering image in the interior of the object. When the difference $\{X - F(\mu_k)\}$ is out of the predetermined range, then an estimated value of an error $\Delta\mu_k$ involved in the k-th presumed image $\mu_k$ is computed through a computation of $\Delta\mu_k = A^{-1}[X - F(\mu_k)]$ wherein $A^{-1}$ is an inverse operator of an operator A used to compute a minute change $A(\alpha)$ of the predicted value $F(\mu_k)$ resulting from a minute change $\alpha$ of the k-th presumed image $\mu_k$. Further, addition of $\mu_k + \Delta\mu_k$ is computed and the resultant value $\Delta_{k+1}$ is fed back to the initial computation as a (k + 1)-th presumed image $\mu_{k+1}$.

EP 0 627 698 A1

## FIG. 1

```
┌─────────────────────┐        ┌──────────────────────────┐
│ MEASURE TRANS-      │        │ SET K=1 WHERE INTERIOR OF│
│ ILUMINATED LIGHT    │        │ OBJECT IS PRESUMED TO BE │
│ (X)                 │        │ HOMOGENEOUS              │
└─────────────────────┘        └──────────────────────────┘
                                           │
                                           ▼
                               ┌──────────────────────────┐
                               │ SET INITIAL VALUE OF     │
                               │ SCATTERING COEFFICIENT(μ₁)│
                               │ AND COMPUTE PREDICTED    │
                               │ VALUE F(μ₁)              │
                               └──────────────────────────┘
           X                               │
           │                               │
           ▼                               ▼
    ┌────────────────────────────────────────────┐
    │ PERFORM ERROR COMPUTATION                   │◄──────┐
    │ X-F(μ_K)                                    │       │
    └────────────────────────────────────────────┘       │
                         │                                │
                         ▼                                │
     ┌──────────┐   ╱─────────────╲                       │
     │ END      │  ╱ LESS THAN     ╲                      │
     │ μ_K=SCATTER-│ PREDETERMINED   ╲                    │
     │ ING IMAGE │ ╲ VALUE ?        ╱  YES                │
     └──────────┘   ╲───────────────╱                     │
                         │ NO                             │
                         ▼                          ┌─────────┐
    ┌────────────────────────────────────┐          │ k=k+1   │
    │ CORRECT SCATTERING DISTRIBUTION     │          └─────────┘
    │ μ_{k+1}=A⁻¹(X-F(μ_k))+μ_k           │               ▲
    └────────────────────────────────────┘               │
                         │ μ_{k+1}                        │
                         ▼                                │
    ┌────────────────────────────────────┐               │
    │ PERFORM PREDICTION OPERATION BY     │               │
    │ F(μ_{k+1})=F(μ_k)+A(μ_{k+1}-μ_k)    │               │
    │            OR                       │               │
    │ MONTE-CARLO SIMULATION              │               │
    └────────────────────────────────────┘               │
                         │ F(μ_{k+1})                     │
                         └────────────────────────────────┘
```

The error computation: $X - F(\mu_K)$

Decision: LESS THAN PREDETERMINED VALUE ?

YES → END $\mu_K$=SCATTERING IMAGE

NO → Correct scattering distribution: $\mu_{k+1} = A^{-1}(X - F(\mu_k)) + \mu_k$

$\mu_{k+1}$

Perform prediction operation by $F(\mu_{k+1}) = F(\mu_k) + A(\mu_{k+1} - \mu_k)$ OR MONTE-CARLO SIMULATION

$F(\mu_{k+1})$

$k=k+1$

The present invention relates generally to an optical computer tomograph, and more particularly to an optical computer tomograph capable of reconstructing a scattering image in the interior of an object to be probed.

In general, in diagnosing the function of a body organ, such as the cerebral tissues, the fundamental and important parameters to measure are the oxygen quantity in the body organ and the organ's utilization of oxygen. Supplying body organs with a sufficient quantity of oxygen is indispensable for the growth ability of new-born infants. If the supply of oxygen is insufficient, the probability that the new-born infant will die is high. Even if the newborn infant lives, the serious problems in the body organs may remain as sequelae. The insufficiency of oxygen affects every body organ, but especially causes a serious damage in the cerebral tissues.

To quickly and readily measure a quantity of oxygen supplied to body organs, such as brain, a diagnostic apparatus using near infra-red spectroscopy technique has been developed as disclosed, for example, in U.S. Patent No. 4,281,645 issued August 4, 1981. This apparatus allows safe continuous monitoring of changes in blood and tissue oxygenation on an intact organ. This is made possible by observing spectral changes in the tissues caused by oxygenated haemoglobin, deoxygenated haemoglobin and cytochrome.

The absorption spectra of near infrared light (700 to 1300 nm), $\alpha Hb_2$ and $\alpha Hb$ by oxyhaemoglobin ($HbO_2$) and deoxyhaemoglobin (Hb), respectively, are different from each other. The absorption spectra of $\alpha CyO_2$ and $\alpha Cy$ by oxidized cytochrome a, $a_3$ (Cy), respectively, are different from each other. This diagnostic apparatus utilizes the above-described absorption spectra of near infrared light. Four near infrared light rays with different wavelengths, $\lambda 1$, $\lambda 2$, $\lambda 3$ and $\lambda 4$ (e.g. 775nm, 800nm, 825nm, and 850nm) are applied to one side of the patient's head with a time-sharing method and the transmission light rays from the opposite side of the head are in turn detected. By processing these four detected light rays with the prescribed calculation program, the density change of oxyhaemoglobin ($HbO_2$), deoxyhaemoglobin (Hb), oxidized cytochrome a, $a_3$ ($CyO_2$) and reduced cytochrome a, $a_3$ (Cy) are calculated. These parameters, in turn, determine the change of cerebral oxygen quantity.

Another devices using near infra-red spectroscopy technique have been proposed as disclosed in Japanese Laid-Open Patent Publication No. 63-275323 or an article entitled "A system for long term measurement of cerebral blood and tissue oxygenation in newborn infants by infrared illumination", Med. Biol. Eng. & Comp., 26, pp 289-294 by Cope M. and Delpy D.T.

As a further development of the near infra-red spectroscopy technique, an optical computer tomograph (optical CT) has recently been proposed to observe an oxygen distribution in brain, rather than to simply measure the oxygen quantity in the cerebral tissue. In such an optical CT, a spatial distribution of optical absorption characteristic is measured using the near infra-red (NIR) rays and an oxygen distribution is obtained upon computation of the measured results. The incident NIR is scattered considerably in the brain unlike probe-ray used in an X-ray CT, MRI (Magnetic Resonance Imaging) or NMR-CT. For this reason, it is technically difficult to reconstruct the oxygen distribution image. The publication entitled "Reconstruction methods for infra-red absorption imaging" by S.R. Arridge et al proposes to give a solution to obviate indefinite outer profile of the reconstructed image.

However, measured by the conventional optical CT are spatial distributions of absorption characteristic in the brain. While the data obtained by such devices are useful in knowing haemoglobin or cytochrome oxygenation, the conventional devices are incapable of affording information regarding difference in tissue organization or change in the tissue composition (e.g. cancer) which can be obtained by the measurement of a spatial distribution of the light scattering characteristic.

The present invention provides an optical computer tomograph which can measure a spatial distribution of scattering characteristics in the interior of an object.

In accordance with the present invention, there is provided an optical computer tomograph which includes irradiating means for irradiating light onto a plurality of points of an object; detecting means for detecting transilluminated light at a plurality of points of the object and outputting a detection value **X**; first operating means having an input applied with data regarding a k-th presumed image $\mu_k$ indicative of a presumed spatial distribution of optical scattering characteristic in the interior of the object, for computing a predicted value $F(\mu_k)$ of the transilluminated light predicted for the k-th presumed image $\mu_k$ using a predetermined prediction operator F, wherein k is an integer; initial value supplying means for supplying an initial predicted value $F(\mu_1)$ predicted on the basis of an initial presumed image $\mu_1$ to said first operating means; and second operating means having a first input applied with the detection value **X** and a second input applied with the predicted value $F(\mu_k)$, for computing a difference $\{X - F(\mu_k)\}$ and outputting a computed result wherein when the difference $\{X - F(\mu_k)\}$ falls within a predetermined range, the k-th presumed image $\mu_k$ is determined as a real scattering image in the interior of the object.

Preferably, the optical computer tomograph of the present invention further includes third operating means for computing an estimated value of an error $\Delta\mu_k$ involved in the k-th presumed image $\mu_k$ through a computation of $\Delta\mu_k = A^{-1}[X -F(\mu_k)]$ wherein $A^{-1}$ is an inverse operator of an operator A having a relationship of $A^{-1}Af = f$ where $f$ is a given function, the operator A being used to compute a minute change $A(\alpha)$ of the predicted value $F(\mu_k)$ resulting from a minute change $\alpha$ of the k-th presumed image $\mu_k$; and fourth operating means for performing addition of $\mu_k + \Delta\mu_k$ and supplying a resultant value $\mu_{k+1}$ to said first operating means as a (k + 1)-th presumed image $\mu_{k+1}$.

Preferably, the prediction operator F is a Monte-Carlo simulation for predicting an amount of light to be detected at each of the plurality of points of the object with respect to the k-th presumed image $\mu_k$, or an equation represented by $F(\mu_{k+1}) = F(\mu_k) + A(\mu_{k+1} - \mu_k)$.

In the preferred embodiment, the initial presumed image $\mu_1$ is assumed to be homogeneous, and wherein the initial predicted value $F(\mu_1)$ is obtained from Green's function of a diffusion equation giving an amount of light to be detected at each of the plurality of points of the object under an assumption that the initial presumed image $\mu_1$ is homogeneous. The operator A is Green's function of a diffusion equation representing a perturbation of an amount of light to be detected at each of the plurality of points of the object in response to a perturbation applied to the k-th presumed image $\mu_k$.

The particular features and advantages of the invention as well as other objects will become apparent from the following description taken in connection with the accompanying drawings, in which:

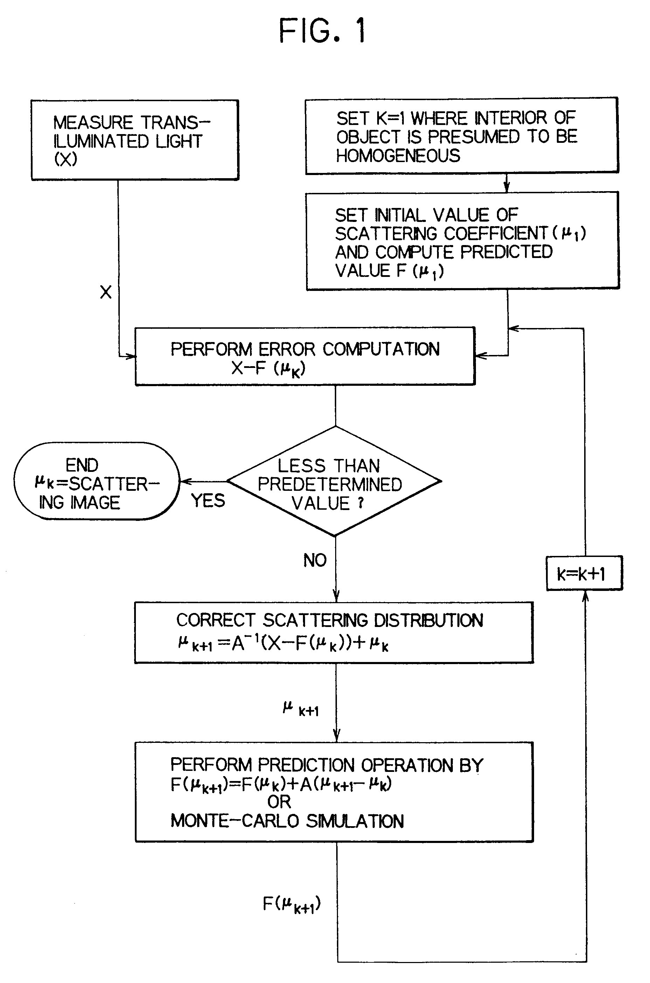

Fig. 1 is a flow chart illustrating operational sequence for reconstructing a scattering image in the interior of an object to be probed according to the present invention;

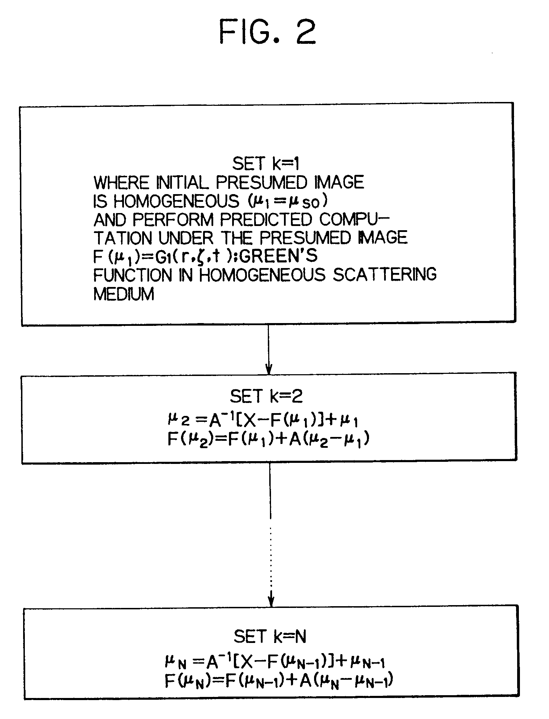

Fig. 2 is a flow chart illustrating operational sequence executed by the present invention; and

Fig. 3 is a flow chart illustrating operational sequence executed according to a modification of the present invention.

To measure a scattering image or spatial distribution of an optical scattering characteristic in the interior of an object, 2N-number (8 in the embodiment) optical fibers are attached to the object to be probed in which N-number (4 in the embodiment) optical fibers are used for irradiating light into the object and the remaining N-number optical fibers are used to detect transilluminated light. The light irradiated from a particular optical fiber is detected at the N-number detecting fibers. Therefore, a set of measurements $X$ including $N^2$-number measurements represented by $X_{kj}$ (k,j = 1 through N) are obtained.

At the initial stage (k = 1) of the image reconstruction algorithm, a homogeneous scattering image $\mu_1$ is assumed to be present in the interior of the object. Given an impulse light $\delta(\zeta, 0)$ incident on the surface of the object at a point $\zeta$ at time t = 0, a photon density distribution $g_1(r, \zeta, t)$ in the interior of the object at a point $r$ at time t is obtained using a diffusion equation where $g_1$ is the Green's function. A solution to the Green's function is given by the following equation.

$$V\{x(\mu_1)Vg_1\} = \mu_a cg_1 + (\partial g_1/\partial t) - \delta(\zeta,0) \qquad (1)$$

where $x$ is a scattering coefficient, $\mu_a$ is an absorption coefficient, and c is the speed of light. The light detected at the surface of the object is of a vertical component of the scattering flow of the photon density $g_1$, and its value $F(\mu_1)$ is given by

$$F(\mu_1) = -x V_n g_1.$$

$F(\mu_1)$ is, for example, given by the following equation for a cylinder of radius $\underline{a}$ which is a good approximation for head, hand or leg.

$$F(\mu_1) = \frac{e^{-\mu_a ct}}{2\pi a^2 \gamma \sqrt{\pi t}} \sum_{n=-\infty}^{\infty} \cos(n\theta) \sum_{\beta n} e^{-\gamma \beta n^2 t} \frac{J_n(\beta_n r) J_n(\beta_n \zeta)}{J_n'(\beta_n a)^2}$$

$$\ldots (2)$$

where $\beta_n$ is a positive root of $J_n(\beta_n) = 0$, $\theta$ is the angular separation of $\zeta$ and r, and the summations are over all roots of all Bessel functions of the first kind $J_n$.

In the actual measurements, $F(\boldsymbol{\mu}_1)$ is given with respect to the incident point $\zeta_k$ and the detection point $\xi_j$. Here, $F(\boldsymbol{\mu}_1)$ is rewritten as $F_{kj}(\boldsymbol{\mu}_1)$ in relation to the associated incident point $\zeta_k$ and the detection point $\xi_j$. The first error computation is carried out by comparing $X_{kj}$ with $F_{kj}(\boldsymbol{\mu}_1)$.

Next, for the k-th presumed image $\boldsymbol{\mu}_k$, a correction component $\Delta\boldsymbol{\mu}_k = A^{-1}[X-F(\boldsymbol{\mu}_k)]$ to be added to $\boldsymbol{\mu}_k$ is obtained based on the difference between the measured value $\mathbf{X}$ and the predicted value $F(\boldsymbol{\mu}_k)$ where $A^{-1}$ is an inverse operator of an operator A. The operator A represents a change of predicted value of the detected light resulting from small perturbation $\Delta\boldsymbol{\mu}_k$ of the presumed scattering image, i.e.,

$$A(\Delta\boldsymbol{\mu}_k) \equiv F(\boldsymbol{\mu}_k + \Delta\boldsymbol{\mu}_k) - F(\boldsymbol{\mu}_k) \qquad (3)$$

Specifically, considering a diffusion equation which gives a photon density $\Phi$ with no perturbation, i.e.,

$$-\mathbf{V}(x(\boldsymbol{\mu}_s)\mathbf{V}\Phi) + \boldsymbol{\mu}_a c\Phi + \partial\Phi/\partial t = q \qquad (4)$$

the photon density $\Phi$ is represented by the Green's function $G_{\mu s}(q) = \Phi$ where when $k = 1$, $G_{\mu 1}(\delta(\zeta,0)) = g_1$.

Next, applying a perturbation $\beta$ of the scattering image $\boldsymbol{\mu}_s$ (i.e., $\boldsymbol{\mu}_s \to \boldsymbol{\mu}_s + \beta$) to equation (4), there would be corresponding perturbations $\nu$ in the scattering coefficient $x$ (i.e., $x \to x + \nu$) and $\eta$ in the photon density $\Phi$ (i.e., $\Phi \to \Phi + \eta$) where there is a relationship of $\nu = (\partial x/\partial\boldsymbol{\mu}_s)\Delta\boldsymbol{\mu}_s = (\partial x/\partial\boldsymbol{\mu}_{s-})\beta$. In this case, $\eta$ is given by:

$$\eta = G_{\mu s}[\mathbf{V}(\nu\mathbf{V}\Phi)] \qquad (5)$$

Specifically, the perturbation $\eta$ of the photon density in the interior of the object resulting from the perturbation $\beta$ of the scattering image $\boldsymbol{\mu}_s$ can be computed as it is dependent on parameters of $\Phi$, $x$ and $\boldsymbol{\mu}_s$ with no perturbations, the Green's function $G_{\mu s}$ with no perturbation, and the perturbation $\beta$. On the other hand, the perturbation of the detected light is given by $-x\mathbf{V}_n\eta$ which corresponds to the operator A, so that the following equation is obtained.

$$A(\beta) = -x\mathbf{V}_n G_{\mu s}[\mathbf{V}\{(\partial x/\partial\boldsymbol{\mu}_s)\beta \cdot \mathbf{V}\Phi\}] \qquad (6)$$

Here, $\boldsymbol{\mu}_s$ corresponds to $\boldsymbol{\mu}_k$ and $\beta$ to $\Delta\boldsymbol{\mu}_k$, so equation (6) can be rewritten as follows:

$$A(\boldsymbol{\mu}_k) = -x\mathbf{V}_n G_{\mu k}[\mathbf{V}\{(\partial x/\partial\boldsymbol{\mu}_k)\beta \cdot \mathbf{V}\Phi\}] \qquad (7)$$

Equation (7) gives perturbation of the detected light at the surface of the object for the perturbation of the presumed image from $\boldsymbol{\mu}_k$ to $\boldsymbol{\mu}_k + \Delta\boldsymbol{\mu}_k$.

The goal to be attained is to obtain a correction value $\Delta\boldsymbol{\mu}_k$ for the presumed image $\boldsymbol{\mu}_k$ from a difference between the measured detection light X and the predicted value $F(\boldsymbol{\mu}_k)$ of the light to be detected for the k-th presumed image $\boldsymbol{\mu}_k$. Based on equation (3), an approximation can be made so that

$$A(\Delta\boldsymbol{\mu}_k) \approx X - F(\boldsymbol{\mu}_k) \qquad (8)$$

Accuracy improves as $F(\boldsymbol{\mu}_k)$ approaches $\mathbf{X}$ in the above approximation. Therefore, upon computing a correction value $\Delta\boldsymbol{\mu}_k = A^{-1}\{X - F(\boldsymbol{\mu}_k)\}$, a predicted value of $F(\boldsymbol{\mu}_{k+1})$ for the (k + 1)-th presumed image given by $\boldsymbol{\mu}_{k+1} = \boldsymbol{\mu}_k + \Delta\boldsymbol{\mu}_k$ is computed to further approach the predicted value of $F(\boldsymbol{\mu}_{k+1})$ toward $\mathbf{X}$. The above-described loop is repeatedly carried out, whereby $F(\boldsymbol{\mu}_k)$ is in access of $\mathbf{X}$ given an appropriate noise inducing circumstance. When $X - F(\boldsymbol{\mu}_k)$ falls below a predetermined level, the $\boldsymbol{\mu}_k$ at this instant is determined as a reconstructed scattering image.

While in the above description, only the scattering image is reconstructed, it is preferable that an absorption image be reconstructed together with the scattering image.

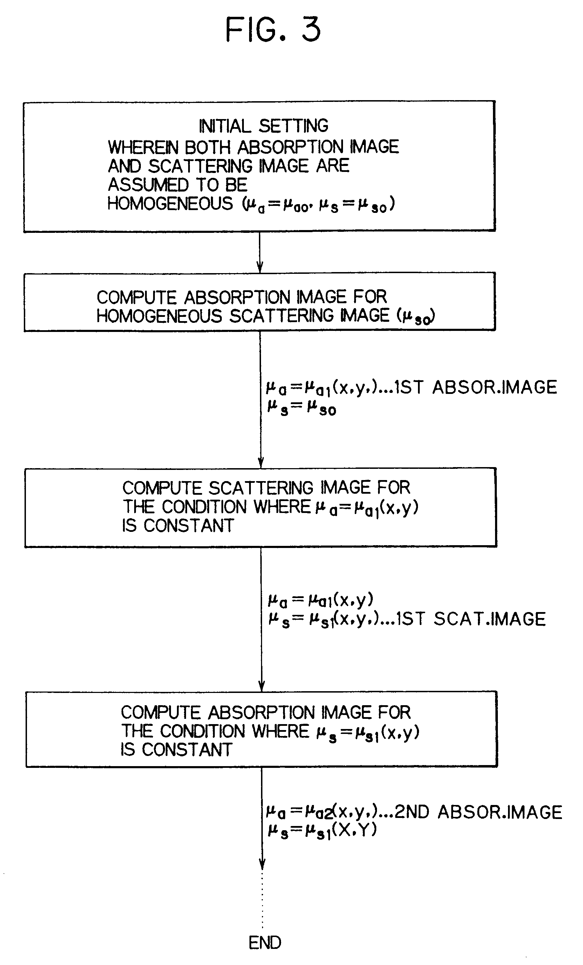

Fig. 3 shows a modification of the present invention wherein the absorption image and the scattering image are obtained independently of each other while performing processing for the absorption image and the scattering image alternately. According to such a processing, both the absorption and scattering images close to the real images are obtainable as the computations are repeatedly carried out in an appropriate noise circumstance.

While the traditional optical computer tomograph measures a spatial distribution of absorption coefficients in the interior of the object as the measurement gives the haemoglobin oxygenation, the present invention provides a new optical computer tomograph which is capable of measuring a spatial distribution of diffusion coefficients in the interior of the object. As such, information regarding tissue organization or tissue composition are available with the optical computer tomograph of the present invention and the information thus obtained are useful in diagnosing cancer or the like.

Further, data regarding the spatial distribution of the absorption coefficients can be obtained together with the spatial distribution of the scattering coefficients. In this case, the accuracy of the former data is greatly improved as compared with the data obtained by the conventional device wherein the spatial distribution of the scattering coefficients are assumed to be homogeneous in obtaining the spatial distribution of the absorption coefficients.

## Claims

1. An optical computer tomograph comprising:
   irradiating means for irradiating light onto a plurality of points of an object;
   detecting means for detecting transilluminated light at a plurality of points of the object and outputting a detection value $X$;
   first operating means having an input applied with data regarding a k-th presumed image $\mu_k$ indicative of a presumed spatial distribution of optical scattering characteristic in the interior of the object, for computing a predicted value $F(\mu_k)$ of the transilluminated light predicted for the k-th presumed image $\mu_k$ using a predetermined prediction operator F, wherein k is an integer;
   initial value supplying means for supplying an initial predicted value $F(\mu_1)$ predicted on the basis of an initial presumed image $\mu_1$ to said first operating means; and
   second operating means having a first input applied with the detection value $X$ and a second input applied with the predicted value $F(\mu_k)$, for computing a difference $\{X - F(\mu_k)\}$ and outputting a computed result wherein when the difference $\{X - F(\mu_k)\}$ falls within a predetermined range, the k-th presumed image $\mu_k$ is determined as a real scattering image in the interior of the object.

2. The optical computer tomograph according to claim 1, further comprising:
   third operating means for computing an estimated value of an error $\Delta\mu_k$ involved in the k-th presumed image $\mu_k$ through a computation of $\Delta\mu_k = A^{-1}[X - F(\mu_k)]$ wherein $A^{-1}$ is an inverse operator of an operator A having a relationship of $A^{-1}Af = f$ where $f$ is a given function, the operator A being used to compute a minute change $A(\alpha)$ of the predicted value $F(\mu_k)$ resulting from a minute change $\alpha$ of the k-th presumed image $\mu_k$; and
   fourth operating means for performing addition of $\mu_k + \Delta\mu_k$ and supplying a resultant value $\mu_{k+1}$ to said first operating means as a (k + 1)-th presumed image $\mu_{k+1}$.

3. The optical computer tomograph according to claim 1 or 2, wherein the prediction operator F is a Monte-Carlo simulation for predicting an amount of light to be detected at each of the plurality of points of the object with respect to the k-th presumed image $\mu_k$.

4. The optical computer tomograph according to claim 1 or 2, wherein the prediction operator F is represented by $F(\mu_{k+1}) = F(\mu_k) + A(\mu_{k+1} - \mu_k)$.

5. The optical computer tomograph according to any one of the preceding claims, wherein the initial presumed image $\mu_1$ is assumed to be homogeneous, and wherein the initial predicted value $F(\mu_1)$ is obtained from Green's function of a diffusion equation giving an amount of light to be detected at each of the plurality of points of the object under an assumption that the initial presumed image $\mu_1$ is homogeneous.

6. The optical computer tomograph according to any one of the preceding claims, wherein the operator A is Green's function of a diffusion equation representing a perturbation of an amount of light to be detected at each of the plurality of points of the object in response to a perturbation applied to the k-th presumed image $\mu_k$.

7. A method of generating an optical computer tomograph image comprising:
   irradiating light onto a plurality of points of an object;
   detecting transilluminated light at a plurality of points of the object and outputting a detection value $X$;
   supplying an initial predicted value $F(\mu_1)$ predicted on the basis of an initial presumed image $\mu_1$;

6

computing a predicted value $F(\boldsymbol{\mu}_k)$ of the transilluminated light predicted for the k-th presumed image $\boldsymbol{\mu}_k$ indicative of a presumed spatial distribution of optical scattering characteristic in the interior of the object using a pre-determined prediction operator F, wherein k is an integer;

computing from the detection value $\mathbf{X}$ and the predicted value $F(\boldsymbol{\mu}_k)$ a difference $\{\mathbf{X} - F(\boldsymbol{\mu}_k)\}$ and outputting a computed result, and when the difference $\{\mathbf{X} - F(\boldsymbol{\mu}_k)\}$ falls within a pre-determined range, outputting the k-th presumed image $\boldsymbol{\mu}_k$ as a real scattering image of the interior of the object.

# FIG. 1

```
┌────────────────────────┐         ┌────────────────────────────┐
│ MEASURE TRANS-         │         │ SET K=1 WHERE INTERIOR OF  │
│ ILUMINATED LIGHT       │         │ OBJECT IS PRESUMED TO BE   │
│ (X)                    │         │ HOMOGENEOUS                │
└────────────────────────┘         └────────────────────────────┘
                                                │
                                   ┌────────────────────────────┐
                                   │ SET INITIAL VALUE OF       │
                                   │ SCATTERING COEFFICIENT(μ₁) │
                                   │ AND COMPUTE PREDICTED      │
                                   │ VALUE F (μ₁)               │
                                   └────────────────────────────┘
```

SET INITIAL VALUE OF SCATTERING COEFFICIENT ($\mu_1$) AND COMPUTE PREDICTED VALUE $F(\mu_1)$

PERFORM ERROR COMPUTATION
$X - F(\mu_k)$

END
$\mu_k$=SCATTER-ING IMAGE

YES

LESS THAN PREDETERMINED VALUE ?

NO

$k = k+1$

CORRECT SCATTERING DISTRIBUTION
$\mu_{k+1} = A^{-1}(X - F(\mu_k)) + \mu_k$

$\mu_{k+1}$

PERFORM PREDICTION OPERATION BY
$F(\mu_{k+1}) = F(\mu_k) + A(\mu_{k+1} - \mu_k)$
OR
MONTE-CARLO SIMULATION

$F(\mu_{k+1})$

X

# FIG. 2

SET k=1
WHERE INITIAL PRESUMED IMAGE
IS HOMOGENEOUS $(\mu_1 = \mu_{so})$
AND PERFORM PREDICTED COMPU-
TATION UNDER THE PRESUMED IMAGE
$F(\mu_1) = G_1(r, \zeta, t)$; GREEN'S
FUNCTION IN HOMOGENEOUS SCATTERING
MEDIUM

SET k=2
$\mu_2 = A^{-1}[X - F(\mu_1)] + \mu_1$
$F(\mu_2) = F(\mu_1) + A(\mu_2 - \mu_1)$

SET k=N
$\mu_N = A^{-1}[X - F(\mu_{N-1})] + \mu_{N-1}$
$F(\mu_N) = F(\mu_{N-1}) + A(\mu_N - \mu_{N-1})$

# FIG. 3

INITIAL SETTING
WHEREIN BOTH ABSORPTION IMAGE
AND SCATTERING IMAGE ARE
ASSUMED TO BE
HOMOGENEOUS ($\mu_a = \mu_{ao}$, $\mu_s = \mu_{so}$)

COMPUTE ABSORPTION IMAGE FOR
HOMOGENEOUS SCATTERING IMAGE ($\mu_{so}$)

$\mu_a = \mu_{a1}(x,y,)$...1ST ABSOR.IMAGE
$\mu_s = \mu_{so}$

COMPUTE SCATTERING IMAGE FOR
THE CONDITION WHERE $\mu_a = \mu_{a1}(x,y)$
IS CONSTANT

$\mu_a = \mu_{a1}(x,y)$
$\mu_s = \mu_{s1}(x,y,)$...1ST SCAT.IMAGE

COMPUTE ABSORPTION IMAGE FOR
THE CONDITION WHERE $\mu_s = \mu_{s1}(x,y)$
IS CONSTANT

$\mu_a = \mu_{a2}(x,y,)$...2ND ABSOR.IMAGE
$\mu_s = \mu_{s1}(X,Y)$

END

10

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | WO-A-91 07655 (SINGER IMAGING INC.) 30 May 1991<br>* claim 1; figure 5 * | 1,7 | G06F15/72 |
| Y | | 3,5,6 | |
| Y | JOURNAL OF THE OPTICAL SOCIETY OF AMERICA A (OPTICS AND IMAGE SCIENCE)<br>vol. 10, no. 1 , January 1993 , USA<br>pages 127 - 140<br>FISHKIN ET AL. 'propagation of photon-density waves in strongly scattering media containing an abhsorbing semi-infinite plane bounded by a atraight edge'<br>* page 132, left column, line 18 - page 136, left column, line 34 * | 3,5,6 | |
| A | OPTIKA I SPEKTROSKOPIYA<br>vol. 72, no. 4 , April 1992 , RUSSIA<br>pages 934 - 939<br>YAROSLAVSKII ET AL. 'light propagation in multilayer scattering media: modeling by the monte-carlo method' | | |
| A | BULLETIN OF MECHANICAL ENGINEERING LABORATORY<br>no. 55 , 1991 , JAPAN<br>pages 1 - 16<br>HASEGAWA ET AL. 'monte-carlo simulation of light transmission through living tissues' | | |

TECHNICAL FIELDS SEARCHED (Int.Cl.5)

G06F
A61B

The present search report has been drawn up for all claims

| Place of search | Date of completion of the search | Examiner |
|---|---|---|
| THE HAGUE | 18 November 1993 | PEREZ MOLINA, E |